# EUROPEAN PATENT APPLICATION

(11) **EP 2 863 670 A1**
(43) Date of publication of application: **22.04.2015**
(21) Application number: 13306442.8
(22) Date of filing: 18.10.2013
(51) Int. Cl.: H04W 12/08, H04W 48/04, H04W 48/18

(54) **Method for updating the FPLMN file of a security element and corresponding steering platform**

(71) Applicant: Gemalto SA, 92190 Meudon (FR)
(72) Inventor: Kuc, Jean-François, 13705 La Ciotat (FR)

(57) **Abstract**

The invention concerns a method for updating the FPLMN file of a security element cooperating with a mobile terminal.

The method consists in transmitting, when a second update location message (14) sent by the terminal (ME) is received by the steering platform (SP) attached to the HLR, from the steering platform (SP) to the mobile terminal (ME), an instruction (16) for updating and refreshing the FPLMN, this instruction (16) comprising an identifier of the network comprised in the second update location message (14).

## Description

The present invention concerns telecommunications in cellular systems, for example GSM, UMTS or LTE.

More precisely, the invention concerns a method of updating the FPLMN file of a secure element (Sim card or UICC) cooperating with a mobile terminal in a roaming situation. The invention also concerns a corresponding steering platform.

The FPLMN (Forbidden Public Land Mobile Network) file is a list on the (U)SIM which contains forbidden networks. When an IMSI is rejected from a network, the network MCC/MNC (Mobile Country Code / Mobile Network Code) is populated in this list and the network is never retried by the terminal.

When a user of a mobile terminal is abroad, he enters in a roaming mode, i.e. he is attached to a visited mobile network operator (VMNO) with which his MNO (Mobile Network Operator) has entered an agreement. This happens typically when the user crosses the border of the country of his MNO.

In a GSM or UMTS network, like all cellular networks, there are individual cells, known as base stations. Each base station covers a small geographical area which is part of a uniquely identified location area. By integrating the coverage of each of these base stations, a cellular network provides a radio coverage over a much wider area. A group of base stations is named a location area, or a routing area.

The location update procedure allows a mobile device to inform the cellular network, whenever it moves from one location area to the next. Mobiles are responsible for detecting location area codes. When a mobile finds that the location area code is different from its last update, it performs another update by sending to the network (to the MSC/HLR of his MNO, MSC being the Mobile Switching Center and HLR being the Home Location Register), a location update request (or message), together with its previous location, and its Temporary Mobile Subscriber Identity (TMSI).

There are several reasons why a mobile may provide updated location information to the network. Whenever a mobile is switched on or off, the network may require it to perform an IMSI (International Mobile Subscriber Identity) attach or IMSI detach location update procedure. Also, each mobile is required to regularly report its location at a set time interval using a periodic location update procedure.

When a subscriber is paged in an attempt to deliver a call or SMS and the subscriber does not reply to that page, then the subscriber is marked as absent in both the Mobile Switching Center / Visitor Location Register (MSC/VLR) and the Home Location Register (HLR). A "mobile not reachable flag" MNRF is set. The next time the mobile performs a location update, the HLR is updated and the "mobile not reachable flag" is cleared.

The MSC/HLR of the MNO of the user typically comprises a steering platform that decides to which network the terminal has to be attached when receiving an update location request message from the terminal. The steering platform intercepts the location request message (comprising its IMSI or TIMSI and the MCC/MNC) transmitted by the terminal and sends back a message indicating to the terminal if he is allowed or not to connect to the foreign network to which he wants to connect.

Typically, the steering platform sends a RNA (Roaming Not Allowed) message to the terminal if the network to which the terminal wants to connect does not have an agreement with the MNO. When receiving this RNA message, the terminal updates and refreshes the FPLMN file of the UICC. The terminal will then try to connect to another network (since this VMNO has been added to the list of the FPLMN).

A problem encountered with some current MSC/VLR is that, when receiving a RNA message from the steering platform of the MNO of the user, they convert this message in another message intended to the terminal. This message is typically a ANA (Area Not Allowed) or a UDV (Unexpected Data Value) message. When receiving this message, the terminal will not update the FPLMN of the UICC and it will continue to try to connect to this VMNO. This leads to another sending of an update location message to the HLR through the VLR, an interception of this message by the steering platform, a sending from the steering platform to the terminal of a RNA message, another conversion of this RNA message to another message (ANA or UDV for example) and the terminal will never be connected to this VMNO unwanted by his MNO. During this time, and so long as the terminal does not detect a network having a greater power as this VMNO, the user will have no connectivity to a cellular network. This causes troubles for the end user.

This situation typically appears when the user of the terminal tries to select manually the network to which he wants to be attached or when the FPLMN file is empty.

The present invention proposes a solution to this problem.

More precisely, the invention proposes to permit to a MNO which user's terminal tries to connect to an unwanted VMNO to register in the FPLMN of the secure element (UICC) of this terminal the references of this VMNO (MCC/MNC).

This purpose is reached thanks to a method for updating the FPLMN file of a security element cooperating with a mobile terminal, this method consisting in transmitting, when a second update location message sent by the terminal is received by the steering platform attached to the HLR, from the steering platform to the mobile terminal, an instruction for updating and refreshing the FPLMN, the instruction comprising an identifier of the network comprised in the second update location message.

Preferably, the method also consists in sending, from the steering platform to the mobile terminal, a message to update the list of preferred networks with the preferred network on which the steering platform wants to steer the user of the mobile terminal.

Advantageously, the method also consists to send from the steering platform to the mobile terminal a message to update the registered network with the preferred network which the steering platform wants to steer the user of said mobile terminal and to requests a refresh for steering.

The invention also concerns a steering platform attached to a HLR, this steering platform comprising means for sending a message for updating and refreshing the FPLMN file of a security element cooperating with a mobile terminal, when a second update location message sent by this terminal is received by the steering platform.

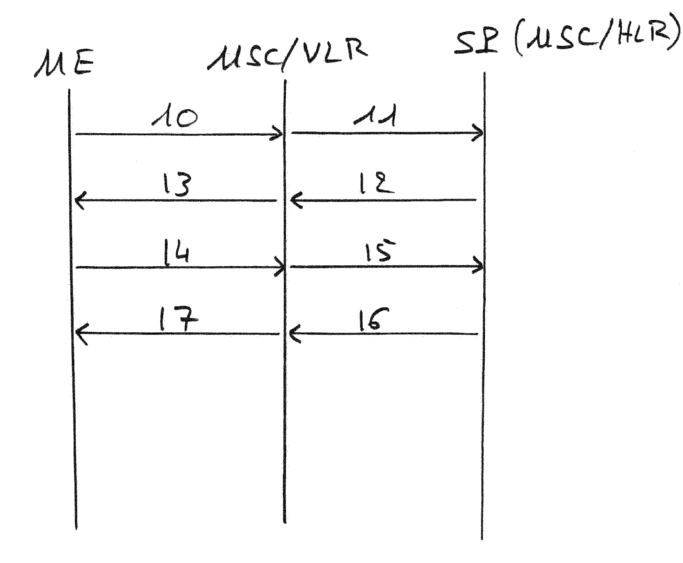

The present invention will be better understood by reading the following description of a preferred implementation of the invention, illustrated by the unique figure.

The figure represents a method for updating the FPLMN file of a security element cooperating with a mobile terminal according to the present invention.

Three main elements are involved: a mobile terminal ME cooperating with a secure element (UICC), a MSC/VLR of a VMNO in a foreign country, and a steering platform SP attached to the MSC/HLR of the MNO of the home country of the subscriber.

When the ME detects that there is an available network in the visited country, it sends (step 10) an update location message to his MSC/HLR. This message comprises the MCC/MNC and an identifier of the VMNO. This message is received by the MSC/VLR and forwarded (step 11) to the MSC/HLR. The update location message is intercepted by the steering platform SP and processed. If the steering platform SP considers that the terminal ME must not be attached to this VMNO (no existing roaming agreement between the MNO and the VMNO for example), the steering platform sends (step 12) a RNA (Roaming Not Allowed) message to the terminal ME.

The MSC/VLR receives this RNA message and should normally forward it to the terminal ME. However, as already explained, it might happen that the MSC/VLR changes this RNA message in another message (UDV or ANA). Let's assume that this effectively happens. The MSC/VLR sends for example (step 13) a UDV message to the terminal ME. At the reception of this UDV message, the terminal ME does not update its FPLMN and retries to connect to the VMNO. This typically happens if the signal strength of the base station of the VMNO received by the ME is greater than the signal strength of base stations of other VMNOs.

When trying to connect again to this VMNO, the terminal ME sends a second update location message (step 14) to the MSC/VLR. Like previously, this message is forwarded to the MSC/HLR (step 15) and intercepted by the steering platform SP. The steering platform then detects that the mobile terminal ME has sent twice an update location message for this VMNO.

The reasons of this second message can be that:
- The terminal ME didn't receive the RNA message sent at step 12
- The RNA message has been intercepted and modified (for example in an UDV message) by the MSC/VLR
- The subscriber is trying to select a visited network manually.

When this second update location message is received by the steering platform SP, it decides to send (at step 16) an instruction for updating and refreshing the FPLMN of the security element of the ME. This instruction comprises an identifier of the network comprised in the second update location message sent at step 14.

By doing this, the steering platform SP updates the forbidden PLMN list (in 2G and 3G) with the visited network that causes the issue. The message can be of the form:
- Update FPLMN 2G with barred network
- Update FPLMN 3G with barred network
- Trigger a STK refresh init + full FCN (qualifier 00) or a STK refresh File change notification (qualifier 01) of FPLMN 2G and FPLMN 3G files or STK refresh initialization and File change notification (qualifier 02) of FPLMN 2G and FPLMN 3G files

The message is received by the MSC/VLR and forwarded to the ME (step 17).

In a preferred embodiment, the steering platform SP can also send a message to update the list of preferred networks (PLMNsel in a 2G network and OPLMNwact in a 3G network) with the preferred network on which the steering platform wants to steer the user.

Moreover, the steering platform SP can also send a message to update the registered network (LOCI, LOCI GPRS, PS LOCI and EPSLOCI) with the preferred network which the steering platform SP wants to steer the user and it requests a refresh for steering (init + full FCN, init, reset, application reset or 3G session reset). This forces the mobile terminal to detach from the VMNO to which it wanted to attach, in order to attach to one of the networks comprised in the PLMN. If such a message of updating the LOCI file is not sent to the ME, it will try, after some time, to connect to a network of the PLMN of higher priority (HHPLMN).

After step 17, the steering platform SP will receive a new update location message from the ME consecutive to the refresh execution. If this message originates from the same MSC/VLR address, it means that the user did a manual selection of this network. Otherwise, the steering platform SP has by-passed the MSC/VLR issue and the user is attached to the preferred network.

The invention also concerns a steering platform SP attached to a HLR, this steering platform comprising means for sending a message for updating and refreshing the FPLMN file of a security element cooperating with a mobile terminal ME, when a second update location message (15) sent by this terminal ME is received by the steering platform SP.

## Claims

1. Method for updating the FPLMN file of a security element cooperating with a mobile terminal (ME), said method consisting in transmitting, when a second update location message (14) sent by said terminal (ME) is received by the steering platform (SP) attached to the HLR, from said steering platform (SP) to said mobile terminal (ME), an instruction (16) for updating and refreshing said FPLMN, said instruction (16) comprising an identifier of the network comprised in said second update location message (14).

2. Method according to claim 1, wherein it also consists in sending, from said steering platform (SP) to said mobile terminal (ME), a message to update the list of preferred networks with the preferred network on which said steering platform (SP) wants to steer the user of said mobile terminal (ME).

3. Method according to any of the claims 1 or 2, wherein it also consists to send from said steering platform (SP) to said mobile terminal (ME) a message to update the registered network with the preferred network which said steering platform (SP) wants to steer the user of said mobile terminal (ME) and to requests a refresh for steering.

4. Steering platform (SP) attached to a HLR, wherein it comprises means for sending a message for updating and refreshing the FPLMN file of a security element cooperating with a mobile terminal (ME), when a second update location message (15) sent by said terminal (ME) is received by said steering platform (SP).
